# EUROPÄISCHE PATENTSCHRIFT

(11) **EP 1 100 831 B1**
(45) Veröffentlichungstag und Bekanntmachung des Hinweises auf die Patenterteilung: **23.10.2002**
(21) Anmeldenummer: 99939417.4
(22) Anmeldetag: 30.07.1999
(51) Int. Cl.: C08B 15/06

(54) **VERFAHREN ZUR HERSTELLUNG VON CELLULOSECARBAMAT**
METHOD FOR PRODUCING CELLULOSE CARBAMATE
PROCEDE DE FABRICATION DE CARBAMATE DE CELLULOSE

(30) Priorität: 07.08.1998 DE 19835688
(43) Veröffentlichungstag der Anmeldung: 23.05.2001
(73) Patentinhaber: Zimmer Aktiengesellschaft, 60388 Frankfurt am Main (DE)
(72) Erfinder: ZIMMERMANN, Jörg, D-51503 Rösrath (DE); NICLAS, Hans-Joachim, D-12435 Berlin (DE); ELBE, Werner, D-06901 Kemberg (DE); BRÜCK, Matthias, D-63517 Rodenbach (DE); WOLF, Reinhard, D-63517 Rodenbach (DE)
(74) Vertreter: Grünecker, Kinkeldey, Stockmair & Schwanhäusser Anwaltssozietät
(86) Internationale Anmeldenummer: EP9905462
(87) Internationale Veröffentlichungsnummer: WO00008060

(56) Entgegenhaltungen:
- EP-A- 0 057 105
- DE-A- 19 628 277
- DE-A- 19 635 246

## Beschreibung

Die vorliegende Erfindung betrifft ein Verfahren zur Herstellung von Cellulosecarbamat, das vor allem zur Herstellung von Fasern, Fäden oder Folien aus Cellulosecarbamat oder daraus regenerierter Cellulose eingesetzt werden kann. Das nach diesem Verfahren hergestellte Cellulosecarbamat kann weiterhin als aktivierte Cellulose, z. B. für Veresterungs- und Veretherungsreaktionen von Cellulose, verwendet werden.

Grundlage der Bildung von Cellulosecarbamat aus der Umsetzung von Cellulose mit Harnstoff ist die thermische Spaltung von Harnstoff (I) in Isocyansäure (II) und Ammoniak (III) (Gleichung 1). Die instabile Isocyansäure stellt den eigentlichen Reaktionspartner der Cellulose dar. Isocyansäure reagiert mit den Alkoholgruppen der Cellulose (IV) unter Ausbildung von Carbamatgruppen, dargestellt als Cellulosecarbamat (V) (Gleichung 2). Gleichung 3 beschreibt den Bruttoreaktionsverlauf.

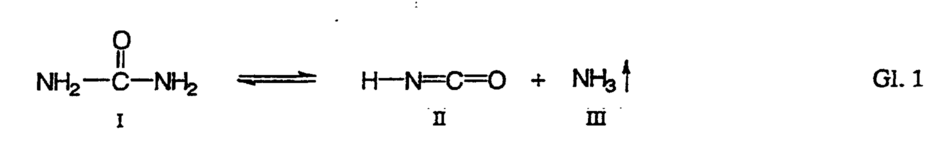

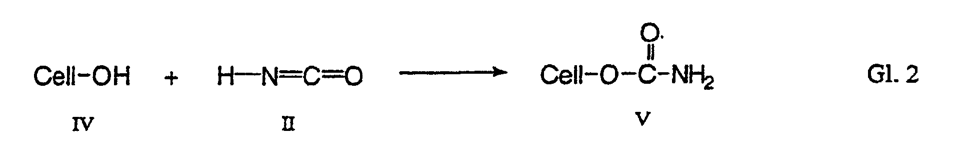

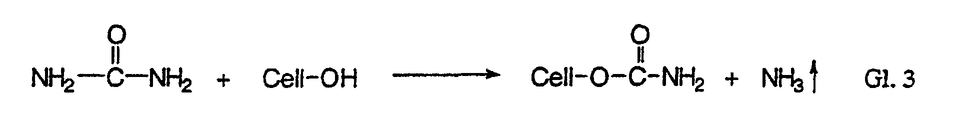

Neben der Reaktion der Isocyansäure mit der Cellulose zu Cellulosecarbamat kommt es durch Reaktion von Isocyansäure mit dem im Überschuß vorliegenden Harnstoff zur unerwünschten Biuret-Bildung (VI) (Gleichung 4).

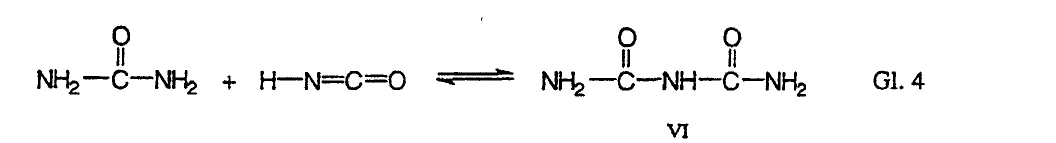

Bekannt ist die Herstellung von Celluloseregenerat-Produkten nach dem Xanthogenatverfahren, welches aber aufgrund seiner aufwendigen Verfahrensstufen und der Verwendung giftiger und feuergefährlicher Chemikalien gravierende Nachteile aufweist. Das Verfahren wird in "Chemiefasern nach dem Viskoseverfahren, K. Götze, Springer-Verlag, 1967" beschrieben. Von besonderem Nachteil ist hier die Verwendung insbesondere von Schwefelkohlenstoff (CS₂) und die Bildung von Schwefelwasserstoff (H₂S).

Bekannt ist auch die Herstellung in verdünnter Natronlauge löslicher Cellulose durch Umsetzung von Cellulose mit Harnstoff. Aus der EP-A 57 105 ist ein Verfahren zur Herstellung von Cellulosecarbamat bekannt, welches auf der Imprägnierung der Cellulose mit Harnstoff in flüssigem Ammoniak basiert. Das Ammoniak dient gleichzeitig als Aktivierungsmittel, welches die kristallinen Strukturen der Cellulose in der Art aufweitet, daß in diesen eine genügend hohe Harnstoffkonzentration vorliegt und die dort befindlichen Hydroxyl-Gruppen der Cellulose in etwa gleich hohe Reaktivität wie die in den amorphen Bereichen der Cellulose vorliegenden Hydroxyl-Gruppen aufweisen. Nach Abdampfen des Ammoniaks wird die so behandelte Cellulose bei Temperaturen oberhalb des Schmelzpunktes von Harnstoff in einem Trockenschrank zu Cellulosecarbamat umgesetzt. Das Reaktionsprodukt wird zur Abtrennung des überschüssigen Harnstoffs und der gebildeten Nebenprodukte mit Wasser und Methanol gewaschen. Nachteilig ist zum einen die kostenintensive Verwendung von flüssigem Ammoniak bei tiefen Temperaturen (unter-33 °C). Zum anderen führt die schlechte Wärmeleitfähigkeit der Cellulose dazu, daß eine homogene Temperaturführung innerhalb der mit Harnstoff imprägnierten Cellulose nicht gewährleistet werden kann. Die damit verbundene Inhomogenität der Substituentenverteilung der Carbamat-Gruppen über die Polymerkette der Cellulose führt zu uneinheitlichen und großtechnisch nicht verwertbaren Produkteigenschaften.

Das in der EP-A 178 292 beschriebene Verfahren ist dadurch gekennzeichnet, daß Cellulose mit Natronlauge getränkt, die Natronlauge anschließend durch Waschen mit harnstoffhaltigem Wasser ausgewaschen und Harnstoff somit in die Cellulose eingetragen wird. Nach anschließender Trocknung wird die mit Harnstoff imprägnierte Cellulose im Trockenschrank bei Temperaturen, die mindestens oberhalb des Schmelzpunktes von Harnstoff liegen, über mehrere Stunden erhitzt und anschließend mit Wasser gewaschen. Nachteilig bei diesem Verfahren ist die Verwendung großer Mengen Natronlauge, die nicht vollständig aus der Cellulose ausgewaschen werden kann. Weiterhin ist im Waschwasser des Rohproduktes, welches große Mengen Harnstoff und Nebenprodukte wie Biuret enthält, Natrium nur schwer zu entfernen. Eine Aufarbeitung gestaltet sich schwierig und somit kostenintensiv. Zusätzlich treten für die Umsetzung im Wärmeschrank alle Nachteile auf, die obenstehend für EP-A 57 105 beschrieben wurden.

Ein ähnliches Verfahren ist aus der DE-OS 196 35 707 bekannt. Cellulose wird in Alkali- oder Erdalkalilaugen suspendiert, die Suspension wird abgepreßt und mit Alkohol gewaschen. Die feuchte Cellulose wird anschließend entweder direkt mit Harnstoff zu Cellulosecarbamat oder zuerst mit Essigsäureanhydrid zu einem Celluloseester und erst anschließend an den Veresterungsschritt mit Harnstoff bei Temperaturen von 135 bis 150 °C zu Cellulosecarbamat umgesetzt. Nachteilig ist wiederum die Verwendung von Alkali- oder Erdalkalilauge mit den oben beschriebenen Schwierigkeiten. Die vorgeschaltete Umsetzung der Cellulose mit Essigsäureanhydrid macht die großtechnische Herstellung von Cellulosecarbamat um einen weiteren Verfahrensschritt komplizierter, da zusätzliche Reinigungsstufen zur Entfernung der Essigsäure benötigt werden.

Die Umsetzung von Cellulose mit Harnstoff in Xylol wird in der EP-A 97 685 empfohlen. Dabei wird der Harnstoff in körniger Form zu einer heterogenen Reaktionsmischung Xylol/Cellulose gegeben. Da Harnstoff in Xylol sehr schlecht löslich ist, werden lange und kostenintensive Reaktionszeiten benötigt. Weiterhin führt die Reaktion zu inhomogenen Produkten, da vomehmlich die amorphen Bereiche der Cellulose mit Harnstoff reagieren, da die kristallinen Bereiche für den zur Reaktion benötigten Harnstoff nicht zugänglich sind.

In der DE-OS 42 42 437 wird die Reaktion von Harnstoff mit Cellulose in einem organischen Reaktionsträger beschrieben. Als Reaktionsträger wird z. B. Toluol verwendet. Zur Imprägnierung der Cellulose mit Harnstoff wird diese bei 50 °C mit einer wäßrigen Harnstofflösung versetzt. Nach Abpressen der überschüssigen Harnstofflösung wird der Wasseranteil gegen den organischen Reaktionsträger durch azeotrope Destillation ausgetauscht und die mit Harnstoff imprägnierte Cellulose über mehrere Stunden bei der Siedetemperatur des Reaktionsträgers zu Carbamatcellulose umgesetzt. Der Reaktionsträger wird, nach Abfiltration des Rohproduktes, gegen eine wäßrige Hamstofflösung, wiederum durch azeotrope Destillation, ausgetauscht. Das gebildete Cellulosecarbamat wird von der Harnstofflösung durch Filtration getrennt und mit Wasser gewaschen. Von Nachteil bei diesem Verfahren ist zum einen die Verwendung eines brennbaren organischen Lösemittels als Reaktionsträger. Zudem werden in diesem Verfahren zweimal unter hohem energetischen Aufwand Wasser und Reaktionsträger gegeneinander ausgetauscht, was zu beträchtlichen Investitions- und Betriebskosten einer solchen Anlage führt.

Außerdem wird das entsprechende Verfahren bei solchen Reaktionsbedingungen durchgeführt, die eine Biuretbildung begünstigen. Das bei Temperaturen oberhalb des Siedepunktes von z. B. Toluol in diesem praktisch unlösliche Ammoniak wird direkt aus dem Reaktionsraum abgeführt, das chemische Gleichgewicht somit in Richtung der Reaktionsprodukte verlagert. Bei einer nach diesem Verfahren durchgeführten Herstellung von Cellulosecarbamat fällt je nach Einsatzmenge an Harnstoff eine nicht unerhebliche Menge an Biuret an, welches weder sinnvoll aufgearbeitet noch in den Reaktionskreislauf zurückgeführt werden kann.

Der vorliegenden Erfindung lag daher die Aufgabe zugrunde, ein Verfahren zur Herstellung von Cellulosecarbamat aus Cellulose und Harnstoff zu entwickeln, welches die genannten Nachteile des Standes der Technik nicht aufweist, sondern auch ohne die Verwendung von brennbaren organischen Lösemitteln und mit geringem verfahrenstechnischem Aufwand zu einem einheitlichen Produkt mit guten anwendungstechnischen Eigenschaften führt.

Diese Aufgabe wurde erfindungsgemäß dadurch gelöst, daß man
a) die Cellulose mit Hilfe einer Ammoniak enthaltenden ggf. wäßrigen Harnstoffschmelze aktiviert bzw. imprägniert,
b) die Umsetzung der Cellulose mit Harnstoff in einer ggf. wäßrigen Harnstoffschmelze bei Temperaturen von 100 bis 160 °C vornimmt und gleichzeitig das bei der Umsetzung entstehende Ammoniak mit Hilfe von Wasser als Schleppmittel aus dem Reaktionsgemisch entfernt und
c) das harnstoffhaltige Rohprodukt abtrennt und aufarbeitet bzw. reinigt.

Es hat sich hierbei überraschenderweise gezeigt, daß man die gleichzeitige Aktivierung und Imprägnierung der Cellulose mit einer Ammoniak enthaltenden Harnstoffschmelze und die Umsetzung der Cellulose auch ohne Zuhilfenahme von organischen Lösemitteln problemlos bewerkstelligen kann. Außerdem führt das erfindungsgemäße Verfahren zu einem einheitlichen Produkt bzgl. der Substituentenverteilung mit guten Löse- bzw. Filtriereigenschaften, was ebenfalls nicht vorhersehbar war.

Das Verfahren entsprechend der vorliegenden Erfindung umfaßt mindestens drei Stufen. In der ersten Stufe a) wird die Cellulose bei Temperaturen zwischen 80 und 160 °C aktiviert und gleichzeitig imprägniert. Die Cellulose mit unterschiedlicher Herkunft und Vorbehandlung weist bekanntermaßen Kristallinitätsgrade von 40 bis 70 % auf, wobei in den kristallinen Bereichen die Diffusion von Lösemitteln und Reaktionspartnern verglichen mit den amorphen Bereichen stark herabgesetzt ist. Dies hat zur Folge, daß Reaktionen der Cellulose in der Regel zu heterogenen Produkten führen. Dies ist darauf zurückzuführen, daß die amorphen Bereiche höhere Umsetzungsgrade aufweisen als die kristallinen, weniger zugänglichen Bereiche. Homogene Reaktionsprodukte können somit nur erzielt werden, wenn die Reaktivitäten in amorphen und kristallinen Bereichen vor der Reaktion angeglichen werden, was mit der sog. Aktivierung erreicht wird. Diese Aktivierung ist deshalb besonders wichtig, weil eine homogene Verteilung über kristalline und amorphe Bereiche sowie eine homogene Substituentenverteilung über die Polymerkette wesentliche Qualitätsparameter der Carbamatcellulose für deren Verwendung, z. B. als Faserrohstoff, darstellen.

Es ist als erfindungswesentlich anzusehen, daß die Cellulose in Stufe a) mit einer Ammoniak enthaltenden Harnstoffschmelze aktiviert wird, wobei eine wasserfreie oder wasserhaltige Harnstoffschmelze gleichermaßen geeignet ist. Der Wassergehalt der Harnstoffschmelze kann hierbei zwischen 0 und 15 Gew.-%, vorzugsweise zwischen 0,5 und 5,0 Gew.-%, bezogen auf die eingesetzte Harnstoffmenge liegen. Durch die in Gleichung (1) beschriebene Reaktion bildet sich in der Harnstoffschmelze eine druck- und temperaturabhängige Ammoniakkonzentration, die für eine Aktivierung der kristallinen Bereiche der Cellulose ausreichend ist. Auf eine Zugabe von zusätzlichem Ammoniak in gasförmiger Form oder als Ammoniakwasser zur Harnstoffschmelze kann beim erfindungsgemäßen Verfahren verzichtet werden, wenn die vorhandene Ammoniakkonzentration in der Harnstoffschmelze für eine Aktivierung ausreichend ist. Dies ist z. B. dann der Fall, wenn die zur Aktivierung von Cellulose verwendete Harnstoffschmelze über einen Zeitraum von wenigen Minuten bis zu mehreren Stunden bei Temperaturen oberhalb 133 °C gehalten wurde. Gemäß einer bevorzugten Ausführungsform wird der Harnstoff mit einer Schnellschmelzeinrichtung bei ca. 140 °C aufgeschmolzen und in den auf 140 °C temperierten Reaktionsbehälter gepumpt. Der Harnstoff kann aber auch als Feststoff, bspw. in kristalliner, prillierter oder granulierter Form, direkt in den Reaktionsbehälter eingebracht werden und in diesem aufgeschmolzen werden. Desweiteren kann der Harnstoff auch als konzentrierte wäßrige Lösung in den Reaktionsbehälter eingebracht werden. In diesem Fall wird der Reaktionsbehälter auf eine bevorzugte Temperatur von ca. 100 °C temperiert.

In diese Hamstoffschmelze, die Harnstoff, Ammoniak und ggf. Wasser enthält, wird die Cellulose in zerfaserter Form oder als Flockenzellstoff feucht oder trocken eingetragen. Gemäß einer bevorzugten Ausführungsform wird die trockene bzw. feuchte Cellulose über eine Dosierstrecke direkt in die ggf. wäßrige Harnstoffschmelze eingebracht und durch Kneten oder Rühren vollständig mit Harnstoff benetzt bzw. in der wasserhaltigen Schmelze imprägniert. Die Cellulose, die vorzugsweise einen Polymerisationsgrad (DP) von 120 bis 2 000, insbesondere 200 bis 600, aufweist, wird vorzugsweise bei Temperaturen von 25 bis 160 °C und insbesondere bei Temperaturen um 135 °C in die Harnstoffschmelze eingearbeitet. Die erfindungsgemäße Aktivierung bzw. Imprägnierung der Cellulose in der Harnstoffschmelze erstreckt sich in der Regel über einen Zeitraum von 10 Minuten bis ca. 5 Stunden.

Die Umsetzung der Cellulose zu Cellulosecarbamat in Stufe b) wird bei Temperaturen zwischen 100 und 160 °C, vorzugsweise zwischen 130 und 150 °C, vorgenommen.

Da Stufe b) ebenfalls in einer ggf. wäßrigen Harnstoffschmelze durchgeführt wird, kann man die Stufen a) und b) des erfindungsgemäßen Verfahrens in einer Eintopfreaktion zusammenfassen. Die Harnstoffschmelze dient hierbei nicht nur als Reaktionspartner der Cellulose, sondern gleichermaßen als Wärmeübertrager, welcher den schlechten Wärmeübergang der Cellulose ausgleicht. Gemäß einer bevorzugten Ausführungsform wird in den Stufen a) und b) mit einer 3- bis 50-fachen Menge Harnstoff, insbesondere einer 10- bis 25-fachen Menge, bezogen auf die Trockenmasse der Cellulose gearbeitet. Als besonders bevorzugt ist ein 15-facher Harnstoffüberschuß anzusehen, wobei die relativ große Menge an Harnstoff die bereits beschriebenen Wärmeübertragungseigenschaften übernimmt. Außerdem weist die Cellulose in den angegebenen Verhältnissen in der Hamstoffschmelze eine sehr gute Rühr- und Pumpfähigkeit auf.

Es ist als erfindungswesentlich anzusehen, daß das in Reaktionsstufe b) entstehende Ammoniak mit Hilfe von Wasser als Schleppmittel aus dem Reaktionsgemisch entfernt wird. Die Entfernung des Ammoniaks aus dem Reaktionsgemisch ist für den Fortgang der Umsetzung von Cellulose mit Harnstoff zu Cellulosecarbamat eine wesentliche Voraussetzung. Gemäß einer bevorzugten Ausführungsform wird das sich im Reaktionsraum und im Reaktionsgemisch befindliche Ammoniak durch kontinuierliches Zudosieren von Wasser in das Reaktionsgemisch in der Weise entfernt, daß das abdestillierende Wasser als Schleppmittel für das Ammoniak fungiert. Diese Verfahrensvariante ist für den Durchschnittsfachmann insofern überraschend, da nach heutigem Wissensstand das Vorhandensein von Wasser einer Umsetzung von Cellulose mit Harnstoff zu Cellulosecarbamat entgegensteht. Die Menge des zudosierten Wassers richtet sich nach der sich einstellenden Gleichgewichtstemperatur im Reaktionsbehälter. Vorzugsweise wird soviel Wasser zudosiert, daß die Verdampfungsenthalpie des zugeführten Wassers die Reaktionstemperatur um 1 bis 20 °C, insbesondere um 5 bis 10 °C, erniedrigt. Für die Reaktionsstufe b) des erfindungsgemäßen Verfahrens werden je nach gewünschtem Substitutionsgrad bzw. Einbau von Carbamatstickstoff Reaktionszeiten von wenigen Minuten bis zu mehreren Stunden benötigt. Vorzugsweise betragen die Reaktionszeiten 0,5 bis 6 Stunden, insbesondere 1,0 bis 1,5 Stunden.

Das erfindungsgemäße Verfahren kann sowohl kontinuierlich bspw. in einem Rührkessel als auch diskontinuierlich, wie z. B. in einem Knetreaktor (z. B. Discotherm B Conti der Fa. List, Schweiz), durchgeführt werden.

Der Abbruch der Reaktionsstufe b) erfolgt vorzugsweise durch Zugabe von Wasser, welches z. B. über eine Pumpe dem Reaktionsgefäß zudosiert wird. Anschließend wird das harnstoffhaltige Rohprodukt in Stufe c) abgetrennt und aufgearbeitet bzw. gereinigt.

In einem kontinuierlichen Verfahren (Knetreaktor) erfolgt die Abtrennung der zähflüssigen Reaktionsmasse vorzugsweise mit Hilfe einer Schnecke bzw. Pumpe, die bspw. in eine Waschstufe (z. B. Schubzentrifuge) überführt wird. Anschließend kann das Rohprodukt, vorzugsweise durch Waschen mit Wasser, gereinigt werden. Dies kann bspw. dadurch erfolgen, daß das Rohprodukt eine Waschzone durchläuft, in der es z. B. auf einem Bandfilter im Gegenstrom-Verfahren mit Frischwasser von restlichem Harnstoff und Nebenprodukten befreit wird. Das erfindungsgemäß erhaltene Cellulosecarbamat kann dann entweder direkt weiterverarbeitet oder einer nachfolgenden Trocknung unterzogen werden.

Die besonderen Vorteile des erfindungsgemäßen Verfahrens bestehen darin, daß die für die Umsetzung benötigte Energie über die Harnstoffschmelze in das Reaktionssystem eingebracht wird. Die große Wärmekapazität des Harnstoffs ermöglicht hierbei eine genaue Temperaturführung, die für die großtechnische Herstellung eines einheitlichen Produktes Grundvoraussetzung ist. Dies stellt einen wesentlichen Vorteil gegenüber den bereits bekannten Verfahren dar, bei denen der Wärmeeintrag entweder über Luft (Trockenschrank) oder über organische Reaktionsträger bewerkstelligt wird.

Das erfindungsgemäße Verfahren besitzt weiterhin den Vorteil, daß Hamstoff ungiftig und nicht brennbar ist. Das entstehende Ammoniak kann leicht aus der Gasphase in ein Waschsystem aufgenommen und als Ammoniakwasser weiterverwertet werden. Überschüssiger Harnstoff kann aus dem Waschwasser durch Eindampfen zurückgewonnen und auf diese Weise wiederverwertet werden.

Da das erfindungsgemäße Verfahren außerdem mit geringem verfahrenstechnischen Aufwand und ohne die Verwendung von organischen Lösemitteln zu einem einheitlichen Produkt führt, eignet es sich in hervorragender Weise für die großtechnische Herstellung von Cellulosecarbamat.

Die nachfolgenden Beispiele sollen die Erfindung näher erläutern.

### Beispiele

### Beispiel 1

In einem Rührbehälter werden bei 150 °C 200 g Harnstoff als Schmelze vorgelegt. Diese Schmelze wird über einen Zeitraum von 15 Minuten bei dieser Temperatur unter Rühren belassen. Dazu werden 30 g trockene, nicht aktivierte Cellulose mit einem DP von 350 gegeben. Die vorliegende Reaktionsmischung wird 90 Minuten bei 150 °C gerührt, während dieser Zeit werden insgesamt 100 ml Wasser über einen Tropftrichter zudosiert. Das Wasser wird zusammen mit dem Ammoniak im Verlauf der Reaktion über eine Destillationsbrücke kontinuierlich aus dem Reaktionsgemisch entfernt. Nach den 90 Minuten wird die Cellulose durch Zugabe von auf 80 °C temperiertem Wasser in diesem suspendiert und weitere 5 Minuten unter Rühren im Reaktionsbehälter belassen. Das Rohprodukt wird anschließend abfiltriert und mehrfach in kleinen Portionen mit insgesamt 3 1 warmem Wasser gewaschen. Nach der Trocknung bei 40 °C erhält man ein Produkt mit einem Stickstoffgehalt von 2,20 % und einem DP von 320. Das Produkt ist in 10 %iger Natronlauge bei -5 °C zu einem Anteil von 8,5 Gew.-% löslich.

### Beispiel 2 (Vergleich)

Es wird entsprechend Beispiel 1 verfahren, auf das Zudosieren von Wasser und Entfernen des Ammoniaks im Laufe der Reaktion wird verzichtet. Man erhält ein Cellulosecarbamat mit einem Stickstoffgehalt von 0,65 % und einem DP von 324. Das Produkt ist in 10 %iger Natronlauge bei -5 °C nicht löslich.

### Beispiel 3

In einem offenen Laborkneter werden bei 150 °C 100 g Harnstoff als Schmelze vorgelegt. Die Schmelze wird über einen Zeitraum von 60 Minuten bei 150 °C im Kneter belassen. Zu dieser Schmelze werden daraufhin 100 g feuchte Cellulose (50 Gew.-% Wassergehalt) mit einem DP von 350 gegeben. Die Schmelze kühlt unter Abdampfen von Wasser auf ca. 100 °C ab. Nach Abdampfen des Wassers steigt die Temperatur der Reaktionsmischung wieder auf 150 °C an. Bei Erreichen der 150 °C wird gerade soviel Wasser zudosiert, daß die Temperatur im Kneter bei 145 °C stabil bleibt. Nach 90 Minuten Reaktionszeit wird wie unter Beispiel 1 und 2 aufgearbeitet. Man erhält ein Cellulosecarbamat mit einem Stickstoffgehalt von 3,05 % und einem DP von 318, welches in 10 %iger Natronlauge bei -5 °C bis zu einem Anteil von 9,0 Gew.-% löslich ist.

## Patentansprüche

1. Verfahren zur Herstellung von Cellulosecarbamat durch Umsetzung von Cellulose mit Harnstoff, **dadurch gekennzeichnet, daß** man
a) die Cellulose mit Hilfe einer Ammoniak enthaltenden ggf. wäßrigen Harnstoffschmelze aktiviert bzw. imprägniert,
b) die Umsetzung der Cellulose mit Harnstoff in einer ggf. wäßrigen Harnstoffschmelze bei Temperaturen von 100 bis 160 °C vornimmt und gleichzeitig das bei der Umsetzung entstehende Ammoniak mit Hilfe von Wasser als Schleppmittel aus dem Reaktionsgemisch entfernt und
c) das harnstoffhaltige Rohprodukt abtrennt und aufarbeitet bzw. reinigt.

2. Verfahren nach Anspruch 1, **dadurch gekennzeichnet, daß** man Cellulose mit einem Polymerisationsgrad von 120 bis 2 000, vorzugsweise von 200 bis 600, einsetzt

3. Verfahren nach den Ansprüchen 1 und 2, **dadurch gekennzeichnet, daß** die Temperatur in Stufe a) zwischen 80 und 160 °C liegt.

4. Verfahren nach den Ansprüchen 1 bis 3, **dadurch gekennzeichnet, daß** man in den Stufen a) und b) eine 3- bis 50-fache Menge Harnstoff, bevorzugt eine 10- bis 25-fache Menge, bezogen auf die Trockenmasse der Cellulose einsetzt.

5. Verfahren nach den Ansprüchen 1 bis 4, **dadurch gekennzeichnet, daß** der Wassergehalt der Harnstoffschmelze in den Stufen a) und b) zwischen 0 und 15 Gew.-%, bevorzugt zwischen 0,5 und 5,0 Gew.-%, bezogen auf die eingesetzte Harastoffmenge liegt.

6. Verfahren nach den Ansprüchen 1 bis 5, **dadurch gekennzeichnet, daß** die Behandlungszeit in Stufe a) 10 Minuten bis 5 Stunden beträgt.

7. Verfahren nach den Ansprüchen 1 bis 6, **dadurch gekennzeichnet, daß** man die Stufen a) und b) in einer Eintopfreaktion durchführt.

8. Verfahren nach den Ansprüchen 1 bis 7, **dadurch gekennzeichnet, daß** man die Reaktionstemperatur in Stufe b) auf 130 bis 150 °C einstellt.

9. Verfahren nach den Ansprüchen 1 bis 8, **dadurch gekennzeichnet, daß** die Stufe b) innerhalb eines Zeitraums von 0,5 bis 6,0 Stunden, bevorzugt innerhalb von 1,0 bis 1,5 Stunden, durchgeführt wird.

10. Verfahren nach den Ansprüchen 1 bis 9, **dadurch gekennzeichnet, daß** man das in Stufe b) entstehende Ammoniak durch kontinuierliches Zudosieren und Abdestillieren von Wasser aus dem Reaktionsgemisch entfernt.

11. Verfahren nach Anspruch 10, **dadurch gekennzeichnet, daß** die Reaktionstemperatur über die Zudosierung des Wassers gesteuert wird.

12. Verfahren nach Anspruch 10, **dadurch gekennzeichnet, daß** die Verdampfungsenthalpie des zudosierten Wassers die Reaktionstemperatur um 1 bis 20 °C, vorzugsweise 5 bis 10 °C, erniedrigt.

13. Verfahren nach den Ansprüchen 1 bis 12, **dadurch gekennzeichnet, daß** man die Umsetzung diskontinuierlich in einem Rührkessel vornimmt.

14. Verfahren nach den Ansprüchen 1 bis 12, **dadurch gekennzeichnet, daß** man die Umsetzung kontinuierlich in einem Knetreaktor durchführt.

15. Verfahren nach den Ansprüchen 1 bis 14, **dadurch gekennzeichnet, daß** Stufe b) durch die Zugabe von Wasser abgebrochen wird.

16. Verfahren nach den Ansprüchen 1 bis 15, **dadurch gekennzeichnet, daß** das Rohprodukt in Stufe c) durch Waschen mit Wasser gereinigt wird.

## Claims

1. A method for producing cellulose carbamate by reacting cellulose with urea, **characterized in that**
a) the cellulose is activated or impregnated by means of an ammonia-containing, optionally aqueous urea melt,
b) the cellulose is reacted with urea in an optionally aqueous urea melt at temperatures of from 100°C to 160°C and the ammonia released during reaction is simultaneously removed from the reaction mixture by using water as an entraining agent, and
c) the urea-containing raw product is separated and processed or purified.

2. The method according to claim 1, **characterized in that** cellulose is used at a degree of polymerization of 120 to 2,000, preferably 200 to 600.

3. The method according to claims 1 and 2, **characterized in that** the temperature in step a) ranges from 80°C to 160°C.

4. The method according to claims 1 to 3, **characterized in that** 3 to 50 times the amount of urea, preferably 10 to 25 times, based on the dry weight of cellulose, is used in steps a) and b)

5. The method according to claims 1 to 4, **characterized in that** the water content of the urea melt in steps a) and b) is between 0 and 15% by wt., preferably between 0.5 and 5.0% by wt., based on the amount of urea used.

6. The method according to claims 1 to 5, **characterized in that** the treatment time in step a) is 10 minutes to 5 hours.

7. The method according to claims 1 to 6, **characterized in that** steps a) and b) are carried out in a one-pot reaction.

8. The method according to claims 1 to 7, **characterized in that** the reaction temperature in step b) is set to 130°C to 150°C.

9. The method according to claims 1 to 8, **characterized in that** step b) is carried out within a period of 0.5 to 6.0 hours, preferably within 1.0 to 1.5 hours.

10. The method according to claims 1 to 9, **characterized in that** the ammonia released in step b) is removed from the reaction mixture by continuously metering and distilling off water.

11. The method according to claim 10, **characterized in that** the reaction temperature is controlled by the metered supply of water.

12. The method according to claim 10, **characterized in that** the evaporation enthalpy of the metered water lowers the reaction temperature by 1°C to 20°C, preferably 5°C to 10°C.

13. The method according to claims 1 to 12, **characterized that** the reaction is discontinuously carried out in a stirrer vessel.

14. The method according to claims 1 to 12, **characterized in that** the reaction is continuously carried out in a kneader reactor.

15. The method according to claims 1 to 14, **characterized in that** step b) is interrupted by adding water.

16. The method according to claims 1 to 15, **characterized in that** the raw product is purified in step c) by washing with water.

## Revendications

1. Procédé de préparation de carbamate de cellulose par réaction de cellulose avec de l'urée, **caractérisé en ce que**
a) on active ou imprègne la cellulose à l'aide d'une masse fondue d'urée contenant de l'ammoniaque et éventuellement aqueuse,
b) on procède à la réaction de la cellulose avec l'urée, dans une masse fondue d'urée éventuellement aqueuse, à des températures de 100 à 160°C, et simultanément on élimine du mélange réactionnel, à l'aide d'eau servant d'agent d'entraînement, l'ammoniaque qui s'est formé lors de la réaction, et
c) on sépare et traite ou purifie le produit brut contenant l'urée.

2. Procédé selon la revendication 1, **caractérisé en ce qu'**on utilise une cellulose ayant un degré de polymérisation de 120 à 2000 et de préférence de 200 à 600.

3. Procédé selon les revendications 1 et 2, **caractérisé en ce que** la température dans l'étape a) est comprise entre 80 et 160°C.

4. Procédé selon les revendication 1 à 3, **caractérisé en ce que**, dans les étapes a) et b), on utilise une quantité d'urée 3 à 50 fois et de préférence 10 à 25 fois supérieure à la masse sèche de la cellulose.

5. Procédé selon les revendications 1 à 4, **caractérisé en ce que** la teneur en eau de la masse fondue d'urée dans les étapes a) et b) est comprise entre 0 et 15 % en poids et de préférence entre 0,5 et 5,0 % en poids par rapport à la quantité d'urée utilisée.

6. Procédé selon les revendications 1 à 5, **caractérisé en ce** la durée du traitement dans l'étape a) est de 10 minutes à 5 heures.

7. Procédé selon les revendications 1 à 6, **caractérisé en ce qu'**on met en oeuvre les étapes a) et b) dans une réaction dans un récipient.

8. Procédé selon les revendications 1 à 7, **caractérisé en ce qu'**on ajuste la température de réaction dans l'étape b) à une valeur de 130 à 150°C.

9. Procédé selon les revendications 1 à 8, **caractérisé en ce que** l'étape b) est mise en oeuvre sur un laps de temps de 0,5 à 6,0 heures et de préférence de 1,0 à 1,5 heure.

10. Procédé selon les revendications 1 à 9, **caractérisé en ce qu'**on élimine du mélange réactionnel l'ammoniaque qui se forme dans l'étape b) par des opérations continues d'addition dosée et d'élimination d'eau par distillation.

11. Procédé selon la revendications 10, **caractérisé en ce que** la température de réaction est pilotée par addition dosée de l'eau.

12. Procédé selon la revendications 10, **caractérisé en ce que** l'enthalpie d'évaporation de l'eau ajoutée en quantité dosée abaisse la température de la réaction de 1 à 20°C et de préférence de 5 à 10°C.

13. Procédé selon les revendications 1 à 12, **caractérisé en ce qu'**on met en oeuvre la réaction d'une manière discontinue dans une cuve à agitateur.

14. Procédé selon les revendications 1 à 12, **caractérisé en ce qu'**on met en oeuvre la réaction d'une manière continue dans un réacteur-malaxeur.

15. Procédé selon les revendications 1 à 14, **caractérisé en ce que** l'étape b) est interrompue par l'addition d'eau.

16. Procédé selon les revendications 1 à 15, **caractérisé en ce que** le produit brut de l'étape c) est purifié par lavage à l'eau.
